# EUROPÄISCHE PATENTSCHRIFT

(11) **EP 3 289 327 B1**
(45) Veröffentlichungstag und Bekanntmachung des Hinweises auf die Patenterteilung: **16.10.2019**
(21) Anmeldenummer: 16718345.8
(22) Anmeldetag: 22.04.2016
(51) Int. Cl.: G01L 1/16, G01L 5/00

(54) **KONTAKTKRAFT-PRÜFVORRICHTUNG, VERWENDUNG EINER SOLCHEN KONTAKTKRAFT-PRÜFVORRICHTUNG UND VERFAHREN ZUR HERSTELLUNG EINER SOLCHEN KONTAKTKRAFT-PRÜFVORRICHTUNG**
CONTACT FORCE TESTING DEVICE, USE OF SUCH A CONTACT FORCE TESTING DEVICE, AND A METHOD FOR PRODUCING SUCH A CONTACT FORCE TESTING DEVICE
DISPOSITIF DE VÉRIFICATION DE FORCE DE CONTACT, UTILISATION D'UN TEL DISPOSITIF DE VÉRIFICATION DE FORCE DE CONTACT ET PROCÉDÉ DE RÉALISATION D'UN TEL DISPOSITIF DE VÉRIFICATION DE FORCE DE CONTACT

(30) Priorität: 30.04.2015 CH 5952015
(43) Veröffentlichungstag der Anmeldung: 07.03.2018
(73) Patentinhaber: Kistler Holding AG, 8408 Winterthur (CH)
(72) Erfinder: MASTROGIACOMO, Giovanni, 8005 Zürich (CH); BRANDENBERGER, Sandro, 8450 Andelfingen (CH); FURTER, Paul, 8471 Bäk (Dägerlen) (CH); STAUB, Reinhard, 8704 Herrliberg (CH); THIEL, Rolf, 8400 Winterthur (CH); CAVALLONI, Claudio, 8105 Regensdorf (CH)
(86) Internationale Anmeldenummer: PCT/EP2016/059088
(87) Internationale Veröffentlichungsnummer: WO 2016/173953

(56) Entgegenhaltungen:
- DE-A1- 1 949 410
- GB-A- 2 465 068
- JP-A- S5 214 468

## Beschreibung

### Technisches Gebiet

Die Erfindung betrifft eine Kontaktkraft-Prüfvorrichtung mit einem Messtaster, eine Verwendung einer solchen Kontaktkraft-Prüfvorrichtung und ein Verfahren zur Herstellung einer solchen Kontaktkraft-Prüfvorrichtung.

### Stand der Technik

Piezoelektrisches Material wird vielerorts zum Aufnehmen von Druck, Kraft und Beschleunigung verwendet. Wie im Buch "Piezoelectric Sensors" von G. Gautschi, veröffentlicht im Springer Verlag beschrieben, lässt sich ein piezoelektrischer Kristall wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, usw. in plattenförmige- oder stabförmige Elemente schneiden, welche Elemente mechanischen Spannungen ausgesetzt werden. Ein piezoelektrischer Aufnehmer bildet somit einen Kondensator, bei dem das piezoelektrische Material zwischen zwei Abnehmerelektroden angeordnet ist. Beim direkten piezoelektrischen Effekt werden dabei elektrische Polarisationsladungen erzeugt, die proportional zur Grösse der mechanischen Spannungen sind. Werden die elektrischen Polarisationsladungen auf piezoelektrischen Materialoberflächen erzeugt, deren Flächennormale parallel zur wirkenden mechanischen Normalspannung ist, so liegt ein longitudinaler piezoelektrischer Effekt vor. Werden die elektrischen Polarisationsladungen auf piezoelektrischen Materialoberflächen erzeugt, deren Flächennormale senkrecht zur wirkenden mechanischen Normalspannung ist, so liegt ein transversaler piezoelektrischer Effekt vor. Über Abnehmerelektroden werden die elektrischen Polarisationsladungen als Ausgangssignal abgenommen. Der elektrische Isolationswiderstand zwischen den Abnehmerelektroden beträgt über 10TΩ.

Neben piezoelektrischen Kristallen lassen sich auch Piezokeramiken wie Bariumtitanat (BaTiO₃), Mischungen (PZT) aus Bleititanat (PbTiO₃) und Bleizirkonat (PbZrO₃), usw. sowie piezoelektrische Polymere wie Polyvinylidenfluorid (PVDF), Polyvinylfluorid (PVF), Polyvinylchlorid (PVC), usw. als piezoelektrisches Material verwenden, wie in DE2831938A1 offenbart.

Elektrische Steckverbindungen weisen männliche Kontaktelemente wie Kontaktstecker, Kontaktstifte, usw. und weibliche Kontaktelemente wie Kontaktkupplungen, Kontaktbuchsen, usw. auf. Die männlichen- und weiblichen Kontaktelemente sind beispielsweise über Kraftschluss reversibel miteinander kontaktierbar. So sind Lamellenkontakte bekannt, mit einer Kontaktbuchse die in Längsrichtung mehrere durch Schlitze beabstandete Lamellen aufweist, welche Lamellen einen eingesteckten Kontaktstift im Bereich einer Kontaktüberdeckung aussenseitig über Federkraft halten. Solche Kontakte müssen oft eine genormte Kontaktkraft erfüllen. Bei der Produktion der elektrischen Steckverbindungen wird daher im Rahmen der Qualitätskontrolle geprüft, ob die Kontaktkraft vordefinierte Sollwerte erfüllt. Dabei wird auch geprüft, ob die elektrischen Steckverbindungen bei erhöhten Einsatztemperaturen von 140°C oder auch 160°C zuverlässig miteinander kontaktieren.

Piezoelektrische Polymere lassen sich als dünne Lagen von kleiner 100µm Dicke herstellen, was mit piezoelektrischen Kristallen nicht möglich ist. Die Mindestdicke von piezoelektrischen Kristallen liegt bei 100µm. Somit sind piezoelektrische Polymere für sehr flach bauende Aufnehmer prädestiniert Auch weist PVDF eine rund 10mal höhere piezoelektrische Empfindlichkeit als SiO₂ Einkristall auf. Andererseits ist der Elastizitätsmodul von PVDF rund 40mal kleiner als derjenige von SiO₂ Einkristall, was zu einer vergleichsweise geringen Steifigkeit führt, wodurch PVDF nur eingeschränkt mechanisch belastbar ist, was wiederum vergleichsweise qualitativ schlechte Ausgangssignalen mit hohen Hysteresen und Abweichungen von der Linearität zur Folge hat. Auch hat PVDF eine hohe Temperaturabhängigkeit der piezoelektrischen Eigenschaften, wodurch sein Einsatzbereich auf Temperaturen kleiner 80°C begrenzt, während piezoelektrische Kristalle wie LGS auch noch bei Temperaturen von 600°C einsetzbar sind.

Aus der DE4003552A1 ist eine Kontaktkraft-Prüfvorrichtung mit einem Messtaster zur Messung der Kontaktkraft bei elektrischen Steckverbindungen bekannt. Der Messtaster weist einen piezoelektrischen Aufnehmer auf, der aus einer Lage piezoelektrischer Polymere, welche in Richtung ihrer länglichen Ausdehnung mittig zwischen zwei Lagen mit Abnehmerelektroden angeordnet ist, besteht. Der piezoelektrische Aufnehmer ist elektrisch isoliert. Dazu sind oberhalb und unterhalb einer jeden Lage Abnehmerelektroden jeweils eine Lage elektrisches Isolationsmaterial und darüber und darunter wiederum jeweils eine Deckplatte angeordnet. Die zu prüfende Kontaktbuchse ist über die Deckplatten mit dem Messtaster kontaktierbar, dazu wird der Messtaster in die Kontaktbuchse getaucht. Die Länge, mit der der Messtaster in die Kontaktbuchse taucht, wird Kontaktüberdeckung genannt. Breite und Dicke des Messtasters betragen 0.7mm, die Länge der Kontaktüberdeckung beträgt 1.0mm.

GB2465068A1 beschreibt einen Leitungsschutzschalter mit mehreren Piezokeramikelementen zum Messen einer Kontaktkraft von Schalterkontakten. Eine auf die Piezokeramikelemente wirkende Kontaktkraft führt zu einer Widerstandsänderung, welche von einer elektrischen Auswerteeinheit gemessen wird. Die Piezokeramikelemente sind auf einer kreisförmigen Stabeinheit angeordnet. Die Kontaktkraft wird über scheibenförmige Ausseneinheiten auf die Piezokeramikelemente übermittelt.

DE1949410A1 bezieht sich auf ein Kontaktprüfgerät zum Prüfen einer Kontaktkraft von Kontaktstücken, wobei auf einer steifen Platte beidseitig ein druckempfindliches Medium angebracht ist. Das druckempfindliche Medium verfärbt sich unter der Wirkung der Kontaktkraft. Zum Schutz und/oder zum Anpassen des Messbereiches an die Kontaktkraft und/oder zum leichten Einschieben des Kontaktprüfgerätes in die Kontaktstücke ist die steife Platte mit dem druckempfindlichen Medium von einer oder mehrerer Durchsichtfolien umgeben.

JPS52014468A1 beschreibt eine Kontaktkraft-Prüfvorrichtung mit einer Elektrode, die zwischen zwei piezoelektrischen Filmlagen gebondet ist. Eine Kontaktkraft eines Kontaktstückes wird gemessen, indem das Kontaktstück die Kontaktkraft-Prüfvorrichtung in einer Kontaktzone kontaktiert. Die piezoelektrischen Filmlagen nehmen die Kontaktkraft auf und erzeugen Polarisationsladungen. Die Elektrode nimmt die erzeugten Polarisationsladungen ab.

Nun werden die Abmessungen von elektrischen Steckverbindungen immer kleiner und dementsprechend muss auch die Kontaktkraft-Prüfvorrichtung immer kleiner bauen. Eine erste Aufgabe der vorliegenden Erfindung ist es, die bekannte Kontaktkraft-Prüfvorrichtung weiter zu miniaturisieren und ein Verfahren zur Herstellung einer solchen Kontaktkraft-Prüfvorrichtung bereitzustellen. Zudem wird eine Verwendung einer Kontaktkraft-Prüfvorrichtung zum Prüfen der elektrischen Steckverbindungen bei erhöhten Einsatztemperaturen gefordert. Schliesslich soll die Kontaktkraft-Prüfvorrichtung möglichst einfach aufgebaut, günstig herstellbar, robust und steif sein, eine hohe Standzeit, eine hohe Verfügbarkeit und eine hohe Messgenauigkeit gewähren. Auch diese weiteren Aufgaben sind der Erfindung gestellt.

### Darstellung der Erfindung

Zumindest eine dieser Aufgaben wird durch die Merkmale der unabhängigen Ansprüche gelöst.

Die Erfindung betrifft eine Kontaktkraft-Prüfvorrichtung, mit einem Messtaster, welcher mit einem elektrischen Kontaktelement kontaktierbar ist und eine Kontaktkraft eines Kontakts mit dem elektrischen Kontaktelement misst, und wobei der Messtaster die Kontaktkraft in einem Kontaktbereich mit einem piezoelektrischen Aufnehmer aufnimmt. Der Messtaster weist mehrere piezoelektrische Aufnehmer auf. Die piezoelektrischen Aufnehmer sind durch Aufnehmerspalte voneinander beabstandet. Der Messtaster weist eine Schutzhülle auf, die Schutzhülle deckt im Kontaktbereich die piezoelektrischen Aufnehmer und die Aufnehmerspalte ab.

Ein erfindungsgemässer Vorteil gegenüber dem Stand der Technik nach der DE4003552A1 liegt also darin, dass der Messtaster mehrere piezoelektrische Aufnehmer aufweist, welche die Kontaktkraft des elektrischen Kontaktelementes im Kontaktbereich mehrmals aufnehmen. Dazu sind die piezoelektrischen Aufnehmer durch Aufnehmerspalte voneinander beabstandet. Eine Schutzhülle deckt im Kontaktbereich die piezoelektrischen Aufnehmer und die Aufnehmerspalte ab. Die Schutzhülle verhindert somit durch ihre mechanische Ausdehnung das Eindringen von Verunreinigungen in den Messtaster und sie ist durch ihre mechanische Ausdehnung eine elektrische Abschirmung des Messtasters. Dadurch ist die Kontaktkraft-Prüfvorrichtung robust und weist eine hohe Verfügbarkeit und eine hohe Messgenauigkeit auf.

Die Erfindung betrifft auch eine Verwendung einer solchen Kontaktkraft-Prüfvorrichtung und ein Verfahren zur Herstellung einer solchen Kontaktkraft-Prüfvorrichtung.

### Kurze Beschreibung der Zeichnungen

Im Folgenden wird die Erfindung beispielhaft unter Beizug der Zeichnungen näher erklärt. Es zeigen
- Fig. 1: schematisch in Ansicht eine elektrische Steckverbindung, die in einem Kontaktbereich mit einer Kontaktkraft reversibel kontaktiert ist;
- Fig. 2: einen Schnitt durch eine Ausführungsform einer Kontaktkraft-Prüfvorrichtung mit Messtaster;
- Fig. 3: eine Ansicht einer Ausführungsform eines weiblichen Kontaktelement, dessen Kontaktkraft mit der Kontaktkraft-Prüfvorrichtung nach Fig. 2 messbar ist;
- Fig. 4: einen Schnitt durch einen Ausschnitt der Kontaktkraft-Prüfvorrichtung nach Fig. 2 mit Details zum Messtaster;
- Fig. 5: einen Schnitt durch einen Ausschnitt der Kontaktkraft-Prüfvorrichtung nach Fig. 4 mit Details zum Kontaktbereich des Messtasters;
- Fig. 6: einen Schnitt durch einen Ausschnitt der Kontaktkraft-Prüfvorrichtung nach Fig. 5 mit Details zum Aufbau des Messtasters;
- Fig. 7: eine perspektivische Sicht der KontaktkraftPrüfvorrichtung nach Fig. 2;
- Fig. 8: einen Querschnitt durch einen Ausschnitt der Kontaktkraft-Prüfvorrichtung nach Fig. 5 mit Details zum Aufbau des Messtasters im Kontaktbereich;
- Fig. 9: einen Schnitt durch einen Ausschnitt der Kontaktkraft-Prüfvorrichtung nach Fig. 4 mit Details zur Schutzkappe und zur Schutzhülle des Messtasters;
- Fig. 10: einen Schnitt durch einen Ausschnitt des Messtasters nach Fig. 9 mit Details zur Schutzhülle des Messtasters im Kontaktbereich; und
- Fig. 11: einen Schnitt durch einen Ausschnitt des Messtasters nach Fig. 9 mit Details zur Schutzhülle des Messtasters im Befestigungsbereich.

### Wege zur Ausführung der Erfindung

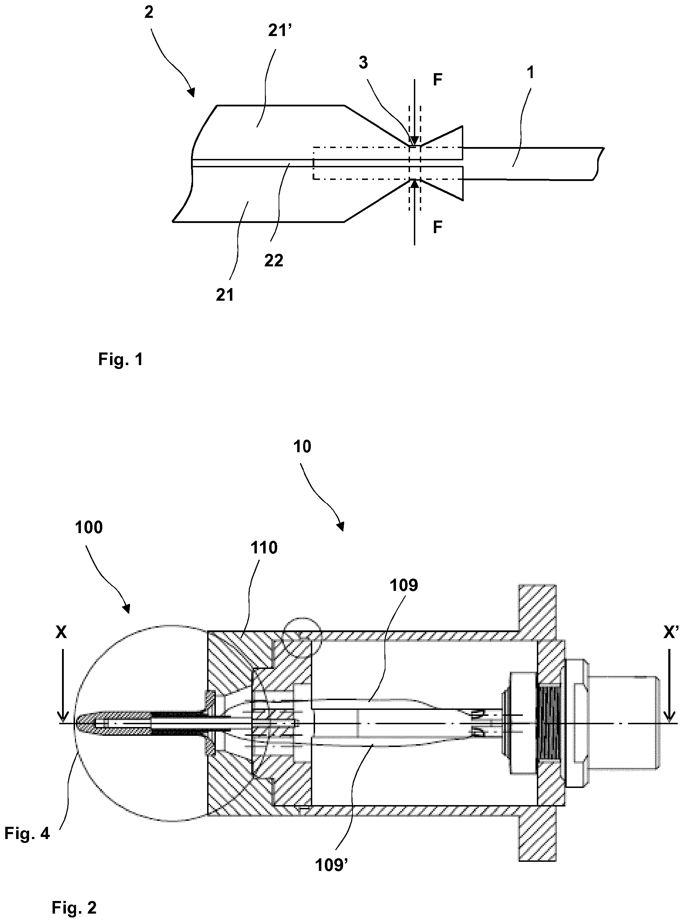

Fig. 1 gibt schematisch in Ansicht eine elektrische Steckverbindung wieder. Die elektrische Steckverbindung weist ein männliches Kontaktelement in Form eines Kontaktstifts 1 auf und sie weist ein weibliches Kontaktelement in Form einer Kontaktbuchse 2 auf. Der Kontaktstift 1 ist reversibel mit der Kontaktbuchse 2 kontaktierbar. Dazu wird der Kontaktstift 1 in die Kontaktbuchse 2 getaucht, so dass sich die beiden Kontaktelemente bereichsweise überdecken. Der Kontaktstift 1 ist im entsprechenden Bereich der Kontaktüberdeckung strichpunktiert dargestellt. In einem mit begrenzenden Strichlinien gekennzeichneten Kontaktbereich 3 findet ein Kraftschluss statt. Die Kontaktbuchse 2 ist im Bereich der Kontaktüberdeckung geschlitzt, beispielsweise sind mehrere Kontaktbuchsenlamellen 21, 21' bereichsweise durch mindestens einen Kontaktbuchsenschlitz 22 voneinander beabstandet und bilden somit ein Federelement. Eine Kontaktkraft F wird durch nach aussen biegen dieses Federelements erzeugt. Die Kontaktbuchse 2 kann mehrere, beispielsweise sechs Kontaktbuchsenlamellen aufweisen. Die Kontaktelemente sind aus metallischem Werkstoff wie Kupfer, Kupferlegierungen, usw. gefertigt. Der Durchmesser des Kontaktstifts 1 liegt im Bereich von 0.35mm bis 25.4mm. Je nach Grösse der Kontaktelemente liegt die Kontaktkraft F im Bereich von 1N bis 10N. Bei Kenntnis der vorliegenden Erfindung kann das Federelement auch am männlichen Kontaktelement wie bei einem 4mm-Federstecker (Bananenstecker) angebracht sein.

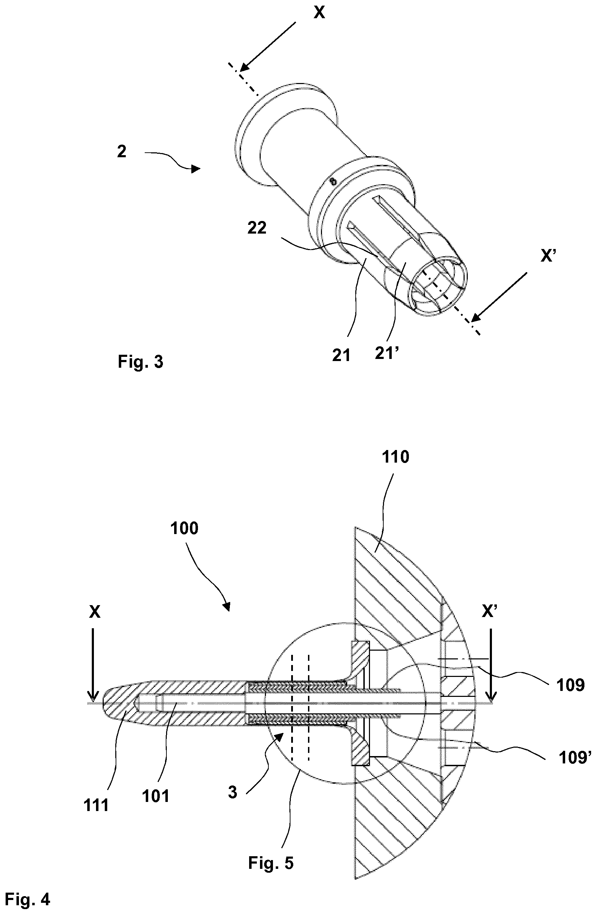

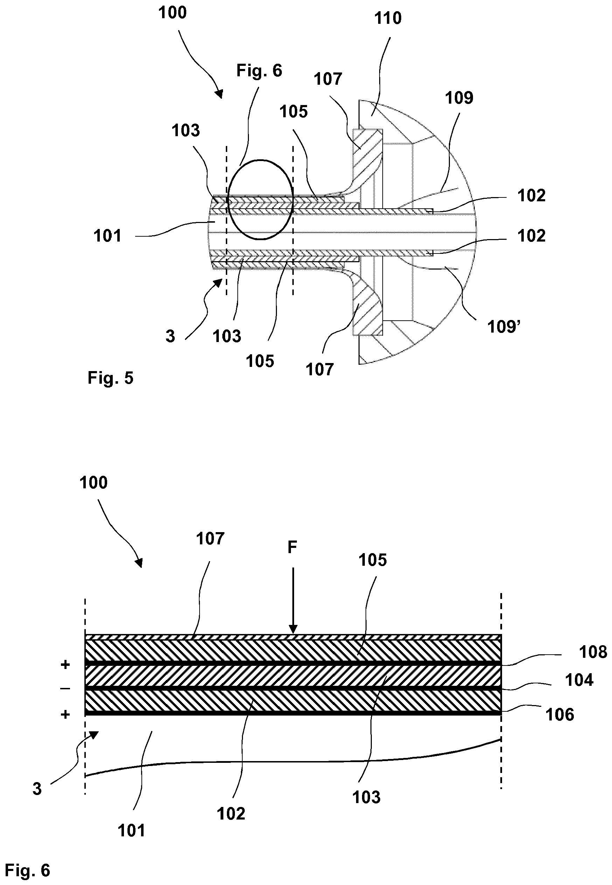

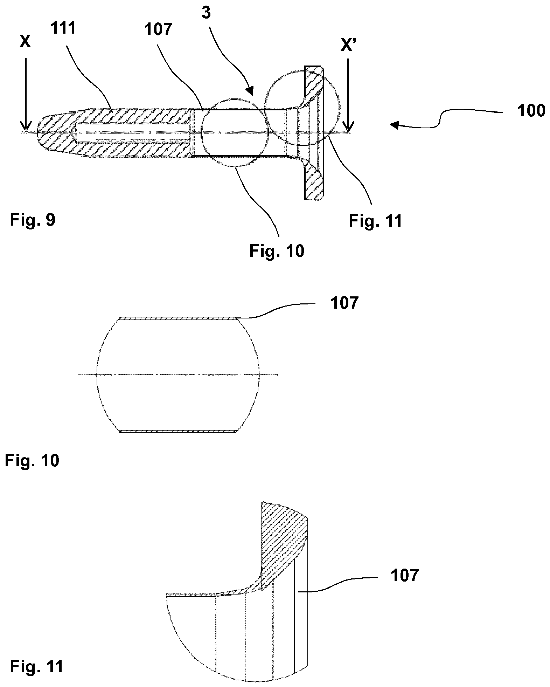

Fig. 2 zeigt einen Schnitt durch eine Ausführungsform einer Kontaktkraft-Prüfvorrichtung 10 mit Messtaster 100. Der Messtaster 100 ist mit einem in Fig. 3 abgebildeten weiblichen Kontaktelement in Form einer Kontaktbuchse 2 kontaktierbar. Messtaster 100 und Kontaktbuchse 2 sind weitgehend kreissymmetrisch bezüglich einer Mittenachse XX' aufgebaut. Eine längliche Ausdehnung von Messtaster 100 und Kontaktbuchse 2 verläuft parallel zu deren Mittenachse XX'. In den Fig. 2, 4, 7 und 9 ist die Mittenachse XX' des Messtasters 100 in einem Mittelpunkt des Messtasters 100 gezeichnet. Die Fig. 2, 4, 5, 6 und 9 sind in Richtung einer Dickenausdehnung des Messtasters 100 geschnitten. Die Dickenausdehnung des Messtasters 100 verläuft normal zur länglichen Ausdehnung des Messtasters 100. Details zum Messtaster 100 sind in Fig. 4 abgebildet. Details zu einem Kontaktbereich 3 des Messtasters 100 sind in Fig. 5 bis 8 dargestellt. Details zu einer Schutzhülle 107 des Messtasters 100 sind in Fig. 9 bis 11 dargestellt. Bei Kenntnis der vorliegenden Erfindung kann ein Fachmann den Messtaster abwandeln, um den Messtaster mit einem männlichen Kontaktelement zu kontaktieren.

Zum Messen einer Kontaktkraft F des weiblichen Kontaktelements wird der Messtaster 100 bezüglich der Mittenachse XX' schräg unterhalb dem Federelement des weiblichen Kontaktelements positioniert. Mit schräg werden Winkel bezeichnet, die von 0° oder 180° verschieden sind, Winkel von 0° oder 180° werden als parallel bezeichnet. Die Kontaktkraft F wird als Normalkontaktkraft gemessen, die normal zur Mittenachse XX' und somit parallel zur Dickenausdehnung des Messtasters 100 wirkt. In Fig. 6 ist die Kontaktkraft F mit einem Kraftpfeil dargestellt. Der Messtaster 100 weist in einem vorderen Bereich eine Schutzkappe 111 auf und er weist im Kontaktbereich 3 piezoelektrisches Material 102, 103 auf. Über die Schutzkappe 111 wird der Messtaster 100 in das weibliche Kontaktelement getaucht. Dabei gleitet die Schutzkappe 111 über eine Innenfläche des weiblichen Kontaktelements bis dass der Kontaktbereich 3 des Messtasters 100 unterhalb dem Federelement des weiblichen Kontaktelements positioniert ist. Um die Abnutzung bei dieser Positionierung möglichst gering zu halten, ist die Schutzkappe 111 aus abriebfestem Material wie Edelstahl, Stahllegierungen, usw. gefertigt und weist als Eintauchhilfe eine sich verjüngende Spitze auf. Natürlich darf die Schutzkappe 111 selber nicht zu abriebfest sein, um das weibliche Kontaktelement beim Messen der Kontaktkraft nicht durch Abrieb zu beschädigen.

Über das piezoelektrische Material 102, 103 nimmt der Messtaster 100 im Kontaktbereich 3 die Kontaktkraft F auf. Auch weist der Messtaster 100 eine Abnehmerelektrode 104 auf, welche im Kontaktbereich 3 in Richtung der Dickenausdehnung des Messtasters 100 vollständig von piezoelektrischem Material 102, 103 umgeben ist und die Polarisationsladungen abnimmt. Anfang und Ende des Kontaktbereiches 3 sind in den Fig. 4 bis 6 beispielhaft mit Strichlinien gekennzeichnet. Schutzkappe 111 und Kontaktbereich 3 sind entlang der länglichen Ausdehnung des Messtasters 100 angeordnet. Schliesslich ist der Messtaster 100 in einem Befestigungsbereich an einem Träger 110 angebracht. Über den Träger 110 lässt sich die Kontaktkraft-Prüfvorrichtung 10 ortsfest stabil befestigen. Der Träger 110 ist aus mechanisch beständigem Material wie Edelstahl, Stahllegierungen, usw. gefertigt.

Das piezoelektrische Material 102, 103 kann aus piezoelektrischem Kristall wie (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, usw. bestehen. Das piezoelektrische Material 102, 103 kann aber auch aus Piezokeramiken wie Bariumtitanat (BaTiO₃), Mischungen (PZT) aus Bleititanat (PbTiO₃) und Bleizirkonat (PbZrO₃), usw. sowie piezoelektrische Polymere wie Polyvinylidenfluorid (PVDF), Polyvinylfluorid (PVF), Polyvinylchlorid (PVC), usw. bestehen. Der Messtaster 100 weist mindestens zwei Lagen piezoelektrischen Materials 102, 103 mit einer Dicke von kleiner/gleich 200pm auf. Bei Verwendung von piezoelektrischem Material 102, 103 aus piezoelektrischem Kristall sind die Lagen als plattenförmige oder stabförmige Elemente mit definierter Kristallorientierung geschnitten. Falls das piezoelektrische Material 102, 103 aus piezoelektrischem Kristall besteht, ist die Kontaktkraft-Prüfvorrichtung 10 auch bei Einsatztemperaturen grösser/gleich 100°C, vorzugsweise bei Einsatztemperaturen im Bereich von 140°C bis 160°C, vorzugsweise bei Einsatztemperaturen kleiner/gleich 600°C einsetzbar. Falls das piezoelektrische Material 102, 103 aus piezoelektrischen Polymeren besteht, sind die Lagen als dünne Folien verfügbar. Das piezoelektrische Material kann in gängigen Dünnschichtverfahren mit definierter Kristallorientierung abgeschieden sein.

Die Lagen piezoelektrischen Materials 102, 103 sind ein- oder beidseitig metallisiert. Die Metallisierung kann durch Thermokaschieren mit einer Metallfolie oder durch Abscheiden von Metall geschehen. Als Metall lassen sich Kupfer, Kupferlegierungen, Gold, Goldlegierungen, Aluminium, Aluminiumlegierungen, Silber, Silberlegierungen, usw. verwenden.

Die Lagen piezoelektrischen Materials 102, 103 sind kristallographisch so orientiert, dass unter der Wirkung der Kontaktkraft F die elektrischen Polarisationsladungen auf der einen Lagenseite als elektrisch negative Oberflächenladungen erzeugt werden und auf der anderen Lagenseite als elektrisch positive Oberflächenladungen erzeugt werden. Um die elektrisch negativen Oberflächenladungen aufzunehmen, sind die Lagen piezoelektrischen Materials 102, 103 auf der Seite der erzeugten elektrisch negativen Oberflächenladungen mit einer ersten Metallisierung versehen. Um die elektrisch positiven Oberflächenladungen aufzunehmen, sind die Lagen piezoelektrischen Materials 102, 103 auf der Seite der erzeugten elektrisch positiven Oberflächenladungen mit einer zweiten und dritten Metallisierung versehen.

Die erste Metallisierung dient aber auch als Fügematerial. Denn um die Empfindlichkeit des Messtasters 100 zu erhöhen und um das piezoelektrische Material 102, 103 mit gängigen Herstellungsverfahren weiterverarbeiten zu können, sind wie in Fig. 6 dargestellt, zwei Lagen piezoelektrischen Materials 102, 103 über ihre ersten Metallisierungen stoffschlüssig miteinander verbunden. Diese stoffschlüssige Verbindung erfolgt über Diffusionsschweissen (Thermokompressionsbonden), Löten, Verkleben mit elektrisch leitfähigem Klebematerial, usw.. Somit bilden die stoffschlüssig miteinander verbundenen ersten Metallisierungen eine Abnehmerelektrode 104 in Form einer Lage metallischen Materials. Die Abnehmerelektrode 104 ist zwischen zwei benachbarten Lagen piezoelektrischen Materials 102, 103 angeordnet und nimmt deren elektrisch negative Oberflächenladungen auf. Diese Abnehmerelektrode 104 ist um einen Faktor 2, vorzugsweise um einen Faktor 10 dünner als Abnehmerelektroden aus dem Stand der Technik. Vorteilhafterweise ist die Dicke der ersten Metallisierungen grösser/gleich der maximalen Rauhtiefe des piezoelektrischen Materials 102, 103. Damit ist sichergestellt, dass das Metall der ersten Metallisierungen beim Diffusionsschweissen bei relativ tiefen Metallisierungstemperaturen zwischen 100°C und 450°C gut diffundieren kann und dass dieses Metall so nach dem Diffusionsschweissen weitgehend alle Oberflächenbereiche der miteinander verbundenen Lagen piezoelektrischen Materials 102, 103 bedeckt. Denn bei solchen relativ tiefen Temperaturen diffundiert das piezoelektrische Material 102, 103 nicht oder nur geringfügig. Somit kann die Abnehmerelektrode 104 weitgehend alle elektrisch negativen Oberflächenladungen aufnehmen, was wiederum zu qualitativ hochwertigen Ausgangssignalen mit niedrigen Hysteresen von kleiner/gleich 3% FSO und hoher Linearität von kleiner/gleich 3% FSO führt, wobei FSO die Abkürzung von Full Scale Output oder auf Deutsch Vollbereichssignal ist. Die so entstandene Lage metallischen Materials weist eine Dicke von kleiner/gleich 5µm auf.

Die von der Abnehmerelektrode 104 abgenommenen Polarisationsladungen werden über einen elektrischen Leiter 109, 109' abgeführt und sind auswertbar. Für eine einfache und sichere elektrische Verbindung des elektrischen Leiters 109, 109' mit der Abnehmerelektrode 104 ist eine erste Lage piezoelektrischen Materials 102 in Richtung der länglicher Ausdehnung des Messtasters 100 länger als eine zweite Lage piezoelektrischen Materials 103 ausgebildet. Nach Fig. 4 und 5 ist die erste Lage piezoelektrischen Materials 102 in Richtung der Dickenausdehnung des Messtasters 100 näher an der Mittenachse XX' angeordnet und bereichsweise länger ausgebildet. Die erste Lage piezoelektrischen Materials 102 weist auf der von der Mittenachse XX' abgewandten Seite eine erste Metallisierung auf. In dem Bereich wo die erste Lage piezoelektrischen Materials 102 länger ausgebildet ist, liegt die erste Metallisierung der ersten Lage piezoelektrischen Materials 102 frei und ist für eine elektrische Verbindung mit dem elektrischen Leiter 109, 109' zugänglich. Diese elektrische Verbindung kann stoffschlüssig sein und über Diffusionsschweissen, Verkleben mit elektrisch leitfähigem Klebematerial, usw. erfolgen. Diese elektrische Verbindung kann aber auch kraftschlüssig sein und über Federkontakt, usw. erfolgen. Jeweils eine Lage piezoelektrischen Materials 102 ist so mit einem elektrischen Leiter 109, 109' elektrisch verbunden. Der elektrische Leiter 109, 109' wiederum ist mit einem nicht dargestellten Ladungsverstärker elektrisch verbunden, welcher Ladungsverstärker die abgenommenen Polarisationsladungen in eine dazu direkt proportionale Spannung wandelt.

Der Messtaster 100 weist eine Grundplatte 101 auf, welche in Richtung der länglichen Ausdehnung des Messtasters 100 angeordnet ist. Die Grundplatte 101 ist aus mechanisch beständigem Material wie Edelstahl, Stahllegierungen, Keramiken, Al₂O₃-Keramiken, usw. gefertigt. Wie in Fig. 4 bis 8 dargestellt, ist die erste Lage piezoelektrischen Materials 102 einseitig mit der Grundplatte 101 stoffschlüssig verbunden und die zweiten Lage piezoelektrischen Materials 103 ist einseitig mit einer Deckplatte 105 stoffschlüssig verbunden. Die Deckplatte 105 ist aus möglichst steifem Material wie Edelstahl, Stahllegierungen, Keramiken, Al₂O₃-Keramiken, usw. gefertigt. Für die stoffschlüssige Verbindung mit den Lagen piezoelektrischen Materials 102, 103 können Grundplatte 101 und Deckplatte 105 metallisiert sein. Die Steifigkeit ergibt sich aus dem Elastizitätsmodul des Materials der Deckplatte 105 und der Geometrie der Deckplatte 105. Eine grosse Steifigkeit ergibt unter mechanischen Spannungen eine geringe Volumenänderung und eine hohe Eigenfrequenz, was zu qualitativ hochwertigen Ausgangssignalen mit niedrigen Hysteresen von kleiner/gleich 3% FSO und hoher Linearität von kleiner/gleich 3% FSO führt.

Um die elektrisch positiven Oberflächenladungen aufzunehmen, ist die erste Lage piezoelektrischen Materials 102 auf der Seite der erzeugten elektrisch positiven Oberflächenladungen mit einer zweiten Metallisierung versehen. Eine stoffschlüssige Verbindung 106 der ersten Lage piezoelektrischen Materials 102 mit der Grundplatte 101 erfolgt über Diffusionsschweissen der zweiten Metallisierung mit der Grundplatte 101. Und um die elektrisch positiven Oberflächenladungen aufzunehmen, ist die zweite Lage piezoelektrischen Materials 103 auf der Seite der erzeugten elektrisch positiven Oberflächenladungen mit einer dritten Metallisierung versehen. Eine stoffschlüssige Verbindung 108 der zweite Lage piezoelektrischen Materials 103 mit der Deckplatte 105 erfolgt über Diffusionsschweissen der dritten Metallisierung mit der Deckplatte 105. Bei Kenntnis der vorliegenden Erfindung kann der Fachmann die stoffschlüssigen Verbindungen 106, 108 auch durch Löten oder durch Verkleben mit elektrisch leitfähigem Klebematerial, usw. realisieren. Die zweite und dritte Metallisierung dienen als Gegenelektrode zur Abnahme der elektrisch positiven Oberflächenladungen der beiden Lagen piezoelektrischen Material 102, 103. Die Gegenelektrode ist über nicht dargestellte elektrische Leiter mit dem Ladungsverstärker elektrisch verbunden. Die von der Mittenachse XX' abgewandte Aussenseite der Deckplatte 105 ist konvex geformt. Diese Aussenseite weist einen Krümmungsradius auf, der weitgehend der Entfernung von der Grundplatte 101 vom Mittelpunkt des Messtasters 100 zur Deckplatte 105 entspricht.

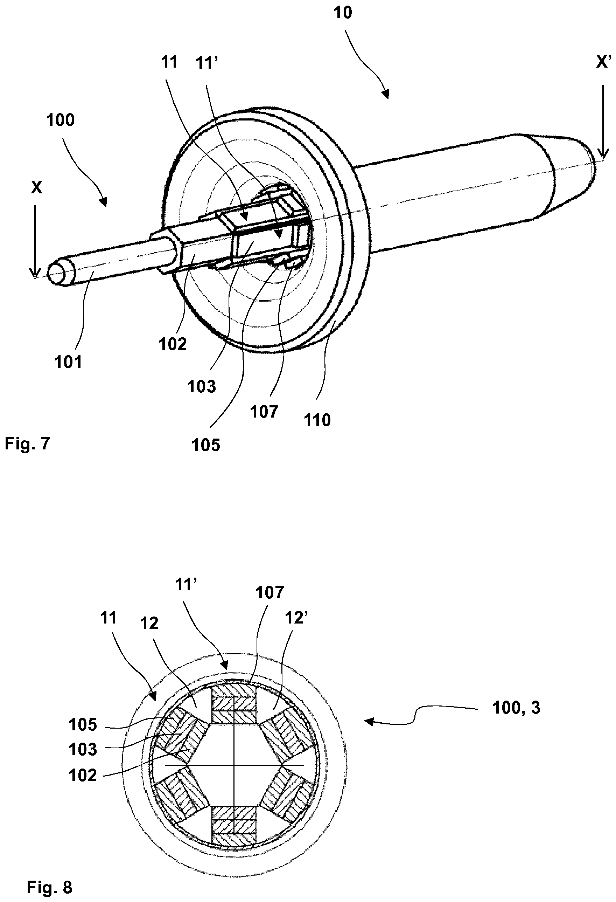

Wie in Fig. 3 dargestellt, weist das weibliche Kontaktelement 2 in der Ausführungsform einer Kontaktbuchse als Federelement sechs Kontaktbuchsenlamellen 21, 21' auf, die bereichsweise durch Kontaktbuchsenschlitze 22 voneinander beabstandet sind. Die Kontaktkraft F dieses weiblichen Kontaktelements 2 ist mit der Kontaktkraft-Prüfvorrichtung 10 nach Fig. 2 messbar. Dazu weist der Messtaster 100 wie in Fig. 7 und 8 dargestellt, sechs piezoelektrische Aufnehmer 11, 11' auf. Jeder piezoelektrische Aufnehmer 11, 11' ist mit der Grundplatte 101 mechanisch verbunden. Vorzugsweise sind die piezoelektrische Aufnehmer 11, 11' über die zweite Metallisierung der ersten Lage piezoelektrischen Materials 102 mit der Grundplatte 101 stoffschlüssig verbunden. Jeder piezoelektrische Aufnehmer 11, 11' umfasst eine erste Lage piezoelektrischen Materials 102 mit zweiter Metallisierung, eine Abnehmerelektrode 104, und eine Deckplatte 105 mit dritter Metallisierung. Die erste Lage piezoelektrischen Materials 102 ist im Kontaktbereich 3 über eine der Mittenachse XX' zugewandte Seite mit der Grundplatte 101 verbunden. Die Abnehmerelektrode 104 ist im Kontaktbereich 3 über eine der Mittenachse XX' zugewandte Seite mit der ersten Lage piezoelektrischen Materials 102 verbunden. Die zweite Lage piezoelektrischen Materials 103 ist im Kontaktbereich 3 über eine der Mittenachse XX' zugewandte Seite mit der Abnehmerelektrode 104 verbunden. Die Deckplatte 105 ist im Kontaktbereich 3 über eine der Mittenachse XX' zugewandte Seite mit der zweiten Lage piezoelektrischen Materials 103 verbunden. Breite und Länge eines piezoelektrischen Aufnehmers 11, 11' im Kontaktbereich 3 entspricht derjenigen einer Kontaktbuchsenlamelle 21, 21'. Bezüglich der Mittenachse XX' des weiblichen Kontaktelements 2 und des Messtasters 100 sind die Kontaktbuchsenlamellen 21, 21' und die piezoelektrische Aufnehmer 11, 11' drehversetzt zueinander angeordnet. Beispielsweise sind die piezoelektrische Aufnehmer 11, 11' symmetrisch drehversetzt zueinander angeordnet, mit einem Winkel des Drehversatzes, der sich aus dem Winkelbetrag des Vollkreises von 360° geteilt durch die Anzahl der piezoelektrische Aufnehmer 11, 11' ergibt, im vorliegenden Fall also mit einem Winkel des Drehversatzes von 60°. Benachbarte piezoelektrische Aufnehmer 11, 11' sind durch einen Aufnehmerspalt 12, 12' voneinander beabstandet. Bezüglich der Mittenachse XX' kommt beim Eintauchen des Messtasters 100 in das weibliche Kontaktelement 2 genau ein piezoelektrischer Aufnehmer 11, 11' im Kontaktbereich 3 kraftschlüssig unterhalb genau einer Kontaktbuchsenlamellen 21, 21' zu liegen. Bei Kenntnis der vorliegenden Erfindung kann der Fachmann mehr oder weniger piezoelektrische Aufnehmer 11, 11' mit einem Drehversatz zueinander anordnen. Bei vier piezoelektrische Aufnehmer 11, 11' beträgt der Winkel des Drehversatzes 90°, Bei acht piezoelektrischen Aufnehmern 11, 11' beträgt der Winkel des Drehversatzes 45°. Die Federkraft der Kontaktbuchsenlamellen 21, 21' lässt sich so einzeln oder integral messen. Bei einzelner Messung der Federkraft misst jeder piezoelektrische Aufnehmer 11, 11' die Kontaktkraft F einer Kontaktbuchsenlamelle 21, 21', bei integraler Messung der Federkraft messen alle piezoelektrischen Aufnehmer 11, 11' die Kontaktkraft F aller Kontaktbuchsenlamellen 21, 21'. Auf diese Weise lässt sich feststellen, ob die Kontaktkraft F einzelner Kontaktbuchsenlamellen 21, 21' vordefinierte Sollwerte erfüllt oder ob die Kontaktkraft F des Federelements des weiblichen Kontaktelements 2 vordefinierte Sollwerte erfüllt.

Der Messtaster 100 weist eine membranartige Schutzhülle 107 auf. Die Schutzhülle 107 liegt bei Kontakt des Messtasters 100 mit dem elektrischen Kontaktelement 1, 2 direkt am elektrischen Kontaktelement 1, 2 an. Die Schutzhülle 107 erfüllt mindestens eine der folgenden Funktionen: so schützt sie die piezoelektrischen Aufnehmer 11, 11', sie schützt die Aufnehmerspalte 12, 12', und sie schützt die elektrischen Leiter 109, 109' des Messtasters 100. Die Schutzhülle 107 schützt vor schädlichen Umwelteinflüssen wie Verunreinigungen (Staub, Feuchtigkeit, usw.). Solche Verunreinigungen beeinflussen die Standzeit und die Verfügbarkeit des Messtasters 100 nachteilig. Dazu verhindert die Schutzhülle 107 durch ihre mechanische Ausdehnung das Eindringen solcher Verunreinigungen in den Messtaster 100. Die Schutzhülle 107 schützt aber auch vor elektrischen und elektromagnetischen Störeffekten in Form von elektromagnetischer Strahlung und ermöglicht somit die elektromagnetische Verträglichkeit des Messtasters 100 und somit der Kontaktkraft-Prüfvorrichtung 10. Dazu ist die Schutzhülle 107 aus elektrisch leitendem Material und absorbiert störende elektromagnetische Strahlung und leitet resultierende elektrische Ströme ab. Die Schutzhülle 107 ist durch ihre mechanische Ausdehnung eine elektrische Abschirmung des Messtasters 100. Schutzhülle 107, Schutzkappe 111 und Träger 110 bilden eine elektrische Abschirmung des Messtasters 100.

Details zur Schutzhülle 107 sind in den Fig. 5 bis 11 dargestellt. Die Schutzhülle 107 liegt in einem vorderen Bereich des Messtasters 100 beispielsweise bündig an der Schutzkappe 111 an und sie ist in einem hinteren Bereich des Messtasters 100 mit dem Träger 110 stoffschlüssig verbunden. Diese stoffschlüssige Verbindung erfolgt über Schweissen, Laserschweissen, Löten, Verkleben mit elektrisch leitfähigem Klebematerial, usw.. Die elektrischen Leiter 109, 109' bilden mit der ersten Metallisierung der ersten Lage piezoelektrischen Materials 102 eine elektrische Verbindung. Diese elektrische Verbindung ist von der Schutzhülle 107 auf die Mittenachse XX' bezogen, von aussen vollständig abgedeckt. Die Schutzhülle 107 ist aus Material wie Edelstahl, Stahllegierungen, usw. gefertigt. Die Schutzhülle 107 ist im Kontaktbereich 3 kreissymmetrisch und deckt im Kontaktbereich 3 die piezoelektrischen Aufnehmer 11, 11' und die Aufnehmerspalte 12, 12' bezüglich der Mittenachse XX' von aussen vollständig ab. Ein Krümmungsradius der Aussenseite der Deckplatte 105 ist kleiner/gleich einem Innenradius der Schutzhülle 107. Wie in Fig. 10 abgebildet, ist die Schutzhülle 107 im Kontaktbereich 3 sehr dünn, mit einer Dicke von kleiner/gleich 200pm, vorzugsweise 50pm. Zur Montage werden die piezoelektrischen Aufnehmer 11, 11' mit der Grundplatte 101 mechanisch verbunden und die Schutzhülle 107 wird in Richtung der länglichen Ausdehnung des Messtasters 100 über die mit der Grundplatte 101 mechanisch verbundenen piezoelektrischen Aufnehmer 11, 11' gezogen. Die Schutzhülle 107 liegt somit kraftschlüssig auf den Aussenseiten der Deckplatten 105 und spannt die Lagen piezoelektrischen Materials 102, 103 mit einer definierten Vorspannung gegen die Grundplatte 101 vor. Bei Kenntnis der vorliegenden Erfindung können Schutzhülle 107 und Schutzkappe 111 auch einstückig hergestellt sein.

### Bezugszeichenliste

- XX': Mittenachse
- F: Kontaktkraft
- 1: Kontaktstift
- 2: Kontaktbuchse
- 3: Kontaktbereich
- 10: Kontaktkraft-Prüfvorrichtung
- 11, 11': piezoelektrische Aufnehmer
- 12, 12': Aufnehmerspalte
- 21, 21': Kontaktbuchsenlamellen
- 22: Kontaktbuchsenschlitz
- 100: Messtaster
- 101: Grundplatte
- 102: erste Lage piezoelektrischen Materials
- 103: zweite Lage piezoelektrischen Materials
- 104: erste Metallisierung oder Abnehmerelektrode
- 105: Deckplatte
- 106: zweite Metallisierung
- 107: Schutzhülle
- 108: dritte Metallisierung
- 109, 109': elektrische Leiter
- 110: Träger
- 111: Schutzkappe

## Patentansprüche

1. Kontaktkraft-Prüfvorrichtung (10) mit einem Messtaster, welcher Messtaster (100) mit einem elektrischen Kontaktelement (1, 2) kontaktierbar ist und eine Kontaktkraft (F) eines Kontakts mit dem elektrischen Kontaktelement (1, 2) misst, und wobei der Messtaster (100) die Kontaktkraft (F) in einem Kontaktbereich (3) mit einem piezoelektrischen Aufnehmer (11) aufnimmt, **dadurch gekennzeichnet, dass** der Messtaster (100) mehrere piezoelektrische Aufnehmer (11, 11') aufweist; dass die piezoelektrischen Aufnehmer (11, 11') durch Aufnehmerspalte (12, 12') voneinander beabstandet sind; dass der Messtaster (100) eine Schutzhülle (107) aus elektrisch leitendem Material aufweist; und dass die Schutzhülle (107) im Kontaktbereich (3) die piezoelektrischen Aufnehmer (11, 11') und die Aufnehmerspalte (12, 12') abdeckt.

2. Kontaktkraft-Prüfvorrichtung (10) nach Anspruch 1, **dadurch gekennzeichnet, dass** die piezoelektrischen Aufnehmer (11, 11') drehversetzt zueinander um eine Mittenachse (XX') des Messtasters (100) angeordnet sind; und dass die Schutzhülle (107) im Kontaktbereich (3) die piezoelektrischen Aufnehmer (11, 11') und die Aufnehmerspalte (12, 12') bezüglich der Mittenachse (XX') von aussen vollständig abdeckt.

3. Kontaktkraft-Prüfvorrichtung (10) nach einem der Ansprüche 1 oder 2, **dadurch gekennzeichnet, dass** die Schutzhülle (107) im Kontaktbereich (3) kraftschlüssig an den piezoelektrischen Aufnehmern (11, 11') anliegt.

4. Kontaktkraft-Prüfvorrichtung (10) nach einem der Ansprüche 2 oder 3, **dadurch gekennzeichnet, dass** der Messtaster (100) eine Grundplatte (101) aufweist, welche in Richtung einer länglichen Ausdehnung des Messtasters (100) angeordnet ist; und dass die piezoelektrischen Aufnehmer (11, 11') mit der Grundplatte (101) mechanisch verbunden sind.

5. Kontaktkraft-Prüfvorrichtung (10) nach Anspruch 4, **dadurch gekennzeichnet, dass** jeder piezoelektrische Aufnehmer (11, 11') eine erste Lage piezoelektrischen Materials (102) aufweist, welche im Kontaktbereich (3) über eine der Mittenachse (XX') zugewandte Seite mit der Grundplatte (101) verbunden ist; dass jeder piezoelektrische Aufnehmer (11, 11') eine Abnehmerelektrode (104) aufweist, welche im Kontaktbereich (3) über eine der Mittenachse (XX') zugewandte Seite mit der ersten Lage piezoelektrischen Materials (102) verbunden ist; dass jeder piezoelektrische Aufnehmer (11, 11') eine zweite Lage piezoelektrischen Materials (103) aufweist, welche im Kontaktbereich (3) über eine der Mittenachse (XX') zugewandte Seite mit der Abnehmerelektrode (104) verbunden ist; dass jeder piezoelektrische Aufnehmer (11, 11') eine Deckplatte (105) aufweist, welche im Kontaktbereich (3) über eine der Mittenachse (XX') zugewandte Seite mit der zweiten Lage piezoelektrischen Materials (103) verbunden ist.

6. Kontaktkraft-Prüfvorrichtung (10) nach Anspruch 5, **dadurch gekennzeichnet, dass** die erste Lage piezoelektrischen Materials (102) auf einer von der Mittenachse (XX') abgewandten Seite eine erste Metallisierung aufweist; dass ein elektrischer Leiter (109, 109') elektrisch mit der ersten Metallisierung verbunden ist; und dass die Schutzhülle (107) diese elektrische Verbindung bezüglich der Mittenachse (XX') von aussen vollständig abdeckt.

7. Kontaktkraft-Prüfvorrichtung (10) nach einem der Ansprüche 5 oder 6, **dadurch gekennzeichnet, dass** eine von der Mittenachse (XX') abgewandte Aussenseite der Deckplatte (105) im Kontaktbereich (3) konvex geformt ist; dass die Schutzhülle (107) im Kontaktbereich (3) kreissymmetrisch ist; und dass ein Krümmungsradius der Aussenseite der Deckplatte (105) kleiner/gleich einem Innenradius der Schutzhülle (107) ist.

8. Kontaktkraft-Prüfvorrichtung (10) nach einem der Ansprüche 1 bis 7, **dadurch gekennzeichnet, dass** die Schutzhülle (107) im Kontaktbereich (3) eine Dicke von kleiner/gleich 200pm, vorzugsweise 50pm aufweist.

9. Kontaktkraft-Prüfvorrichtung (10) nach einem der Ansprüche 1 bis 8, **dadurch gekennzeichnet, dass** der Messtaster (100) in einem vorderen Bereich eine Schutzkappe (111) aufweist; dass der Messtaster (100) in einem hinteren Bereich einen Träger (110) aufweist; dass die Schutzhülle (107) im vorderen Bereich des Messtasters (100) bündig an der Schutzkappe (111) anliegt; und dass die Schutzhülle (107) im hinteren Bereich des Messtasters (100) mit dem Träger (110) stoffschlüssig verbunden ist.

10. Kontaktkraft-Prüfvorrichtung (10) nach einem der Ansprüche 1 bis 9, **dadurch gekennzeichnet, dass** die Schutzhülle (107) durch ihre mechanische Ausdehnung das Eindringen von Verunreinigungen in den Messtaster (100) verhindert.

11. Kontaktkraft-Prüfvorrichtung (10) nach einem der Ansprüche 1 bis 10, **dadurch gekennzeichnet, dass** die Schutzhülle (107) durch ihre mechanische Ausdehnung eine elektrische Abschirmung des Messtasters (100) bildet.

12. Kontaktkraft-Prüfvorrichtung (10) nach einem der Ansprüche 1 bis 11, **dadurch gekennzeichnet, dass** die Schutzhülle (107) bei Kontakt des Messtasters (100) mit dem elektrischen Kontaktelement (1, 2) direkt am elektrischen Kontaktelement (1, 2) anliegt.

13. Verwendung einer Kontaktkraft-Prüfvorrichtung (10) nacheinem der Ansprüche 1 bis 12, **dadurch gekennzeichnet, dass** die Kontaktkraft (F) eines im Kontaktbereich (3) mit der Kontaktkraft-Prüfvorrichtung (10) kontaktierten elektrischen Kontaktelements (2) schräg zu einer länglichen Ausdehnung des Messtasters (100) wirkt; das elektrische Kontaktelement (2) eine Kontaktbuchse mit Kontaktbuchsenlamellen (21, 21') ist; und dass die piezoelektrischen Aufnehmer (11, 11') bezüglich der Mittenachse (XX') unterhalb der Kontaktbuchsenlamellen (21, 21') liegen.

14. Verwendung einer Kontaktkraft-Prüfvorrichtung (10) nach Anspruch 13, **dadurch gekennzeichnet, dass** genau ein piezoelektrischer Aufnehmer (11, 11') des Messtasters (100) unterhalb genau einer Kontaktbuchsenlamelle (21, 21') liegt; und dass jeder piezoelektrische Aufnehmer (11, 11') die Kontaktkraft (F) einer Kontaktbuchsenlamelle (21, 21') misst.

15. Verwendung einer Kontaktkraft-Prüfvorrichtung (10) nach Anspruch 13, **dadurch gekennzeichnet, dass** alle piezoelektrischen Aufnehmer (11, 11') die Kontaktkraft (F) aller Kontaktbuchsenlamellen (21, 21') messen.

16. Verfahren zur Herstellung einer Kontaktkraft-Prüfvorrichtung (10) nach einem der Ansprüche 1 bis 15, **dadurch gekennzeichnet, dass** die piezoelektrischen Aufnehmer (11, 11') mit einer Grundplatte (101) des Messtasters (100) mechanisch verbunden werden; und dass die Schutzhülle (107) in Richtung der länglichen Ausdehnung des Messtasters (100) über die mit einer Grundplatte (101) mechanisch verbundenen piezoelektrischen Aufnehmer (11, 11') gezogen wird.

## Claims

1. Contact force testing apparatus (10) comprising a measuring sensor, which measuring sensor (100) can be contacted with an electrical contact element (1, 2) and measures a contact force (F) of a contact with the electrical contact element (1, 2) and wherein the measuring sensor (100) receives the contact force (F) in a contact region (3) with a piezoelectric pick-up (11), **characterized in that** the measuring sensor (100) comprises a plurality of piezoelectric pick-ups (11, 11'); that the piezoelectric pick-ups (11, 11') are spaced apart from one another by pick-up gaps (12, 12'); that the measuring sensor (100) has a protective sleeve (107) is made of electrically conductive material; and that the protective sleeve (107) covers the piezoelectric pick-ups (11, 11') and the pick-up gaps (12, 12') in the contact region (3).

2. The contact force testing apparatus (10) according to claim 1, **characterized in that** piezoelectric pick-ups (11, 11') are arranged rotationally offset with respect to one another about a central axis (XX') of the measuring sensor (100); and that the protective sleeve (107) completely covers from the outside the piezoelectric pick-ups (11, 11') and the pick-up gaps (12, 12') with respect to the central axis (XX') in the contact region (3) .

3. The contact force testing apparatus (10) according to any one of claims 1 or 2, **characterized in that** the protective sleeve (107) abuts non-positively against the piezoelectric pick-ups (11, 11') in the contact region (3) .

4. The contact force testing apparatus (10) according to any one of claims 2 or 3, **characterized in that** the measuring sensor (100) has a base plate (101) which is disposed in the direction of an elongate extension of the measuring sensor (100); and that the piezoelectric pick-ups (11, 11') are connected mechanically to the base plate (101).

5. The contact force testing apparatus (10) according to claim 4, **characterized in that** each piezoelectric pick-up (11, 11') has a first layer of piezoelectric material (102) which is connected in the contact region (3) via a side facing the central axis (XX') to the base plate (101); that each piezoelectric pick-up (11, 11') has an acceptor electrode (104) which is connected in the contact region (3) via a side facing the central axis (XX') to the first layer of piezoelectric material (102); that each piezoelectric pick-up (11, 11') has a second layer of piezoelectric material (103) which is connected in the contact region (3) via a side facing the central axis (XX') to the acceptor electrode (104); that each piezoelectric pick-up (11, 11') has a cover plate (105) which is connected in the contact region (3) via a side facing the central axis (XX') to the second layer of piezoelectric material (103).

6. The contact force testing apparatus (10) according to claim 5, **characterized in that** the first layer of piezoelectric material (102) has a first metallization on a side facing away from the central axis (XX'); that an electrical conductor (109, 109') is connected electrically to the first metallization; and that the protective sleeve (107) completely covers this electrical connection from the outside with respect to the central axis (XX').

7. The contact force testing apparatus (10) according to any one of claims 5 or 6, **characterized in that** an outer side of the cover plate (105) facing away from the central axis (XX') is convexly shaped in the contact region (3); that the protective sleeve (107) is circularly symmetrical in the contact region (3); and that a radius of curvature of the outer side of the cover plate (105) is less than/equal to an inner radius of the protective sleeve (107).

8. The contact force testing apparatus (10) according to any one of claims 1 to 7, **characterized in that** the protective sleeve (107) has a thickness of less than/equal to 200 µm, preferably 50 µm, in the contact region (3).

9. The contact force testing apparatus (10) according to any one of claims 1 to 8, **characterized in that** the measuring sensor (100) has a protective cap (111) in a front region; that the measuring sensor (100) has a support (110) in a rear region; that the protective sleeve (107) abuts flush against the protective cap (111) in the front region of the measuring sensor (100); and that the protective sleeve (107) is connected in a firmly bonded manner to the support (110) in the rear region of the measuring sensor (100).

10. The contact force testing apparatus (10) according to any one of claims 1 to 9, **characterized in that** due to its mechanical extension, the protective sleeve (107) prevents the penetration of impurities into the measuring sensor (100).

11. The contact force testing apparatus (10) according to any one of claims 1 to 10, **characterized in that** due to its mechanical extension, the protective sleeve (107) forms an electrical shielding of the measuring sensor (100) .

12. The contact force testing apparatus (10) according to any one of claims 1 to 11, **characterized in that** the protective sleeve (107) abuts directly against the electrical contact element (1, 2) upon contact of the measuring sensor (100) with the electrical contact element (1, 2).

13. Use of a contact force testing apparatus (10) according to any one of claims 1 to 12, **characterized in that** the contact force (F) of an electrical contact element (2) contacted in the contact region (3) by the contact force testing apparatus (10) acts obliquely to an elongate extension of the measuring sensor (100); the electrical contact element (2) is a contact socket with contact socket lamellae (21, 21'); and that the piezoelectric pick-ups (11, 11') lie underneath the contact socket lamellae (21, 21') with respect to the central axis (XX').

14. Use of a contact force testing apparatus (10) according to claim 13, **characterized in that** precisely one piezoelectric pick-up (11, 11') of the measuring sensor (100) lies underneath a contact socket lamellae (21, 21'); and that each piezoelectric pick-up (11, 11') measures the contact force (F) of a contact socket lamella (21, 21').

15. Use of a contact force measuring apparatus (10) according to claim 13, **characterized in that** all the piezoelectric pick-ups (11, 11') measure the contact force (F) of all the contact socket lamellae (21, 21').

16. Method for producing a contact force testing apparatus (10) according to any one of claims 1 to 15, **characterized in that** the piezoelectric pick-ups (11, 11') are connected mechanically to a base plate (101) of the measuring sensor (100); and that the protective sleeve (107) is pulled in the direction of the elongate extension of the measuring sensor (100) over the piezoelectric pick-ups (11, 11') connected mechanically to a base plate (101).

## Revendications

1. Dispositif d'essai d'une force de contact (10) comportant une sonde de mesure (100), dans lequel ladite sonde de mesure (100) peut être mise en contact avec un élément de contact (1, 2) électrique et mesure une force de contact (F) d'un contact avec l'élément de contact (1, 2) électrique; et dans lequel la sonde de mesure (100) détecte la force de contact (F) dans une zone de contact (3) par l'intermédiaire d'un capteur piézoélectrique (11), **caractérisé en ce que** ladite sonde de mesure (100) comporte plusieurs capteurs piézoélectriques (11, 11'); que lesdits capteurs piézoélectriques (11, 11') sont espacés l'un de l'autre par des fentes de capteur (12, 12'); que la sonde de mesure (100) comporte une gaine protectrice (107) d'un matériau électriquement conducteur; et **en ce que** ladite gaine protectrice (107) couvre les capteurs piézoélectriques (11, 11') et les fentes de capteur (12, 12') dans la zone de contact (3).

2. Dispositif d'essai d'une force de contact (10) selon la revendication 1, **caractérisé en ce que** lesdits capteurs piézoélectriques (11, 11') sont agencés l'un par rapport à l'autre de manière décalés en rotation autour d'une axe central (XX') de la sonde de mesure (100); et **en ce que** ladite gaine protectrice (107) couvre les capteurs piézoélectriques (11, 11') et les fentes de capteur (12, 12') en intégralité de l'extérieur dans la zone de contact (3).

3. Dispositif d'essai d'une force de contact (10) selon l'une quelconque des revendications 1 ou 2, **caractérisé en ce que** la gaine protectrice (107) repose sur les capteurs piézoélectriques (11, 11') de manière à établir une liaison par adhérence dans la zone de contact (3).

4. Dispositif d'essai d'une force de contact (10) selon l'une quelconque des revendications 2 or 3, **caractérisé en ce que** la sonde de mesure (100) comporte une plaque de base (101), laquelle est agencée en direction d'une direction de l'extension longitudinale de la sonde de mesure (100); et **en ce que** les capteurs piézoélectriques (11, 11') sont mécaniquement connectés à la plaque de base (101).

5. Dispositif d'essai d'une force de contact (10) selon la revendication 4, **caractérisé en ce que** chaque capteur piézoélectrique (11, 11') comporte une première couche de matériau piézoélectrique (102) connectée à la plaque de base (101) dans la zone de contact (3) par son côté faisant face à l'axe central (XX'); que chaque capteur piézoélectrique (11, 11') comporte une électrode de capteur (104) connectée à la première couche de matériau piézoélectrique (102) dans la zone de contact (3) par son côté faisant face à l'axe central (XX'); que chaque capteur piézoélectrique (11, 11') comporte une seconde couche de matériau piézoélectrique (103) connectée à l'électrode de capteur (104) dans la zone de contact (3) par son côté faisant face à l'axe central (XX'); et **en ce que** chaque capteur piézoélectrique (11, 11') comporte une plaque supérieure (105) connectée à la seconde couche de matériau piézoélectrique (103) dans la zone de contact (3) par son côté faisant face à l'axe central (XX').

6. Dispositif d'essai d'une force de contact (10) selon la revendication 5, **caractérisé en ce que** la première couche de matériau piézoélectrique (102) est munie d'une première métallisation sur son côté opposé à l'axe central (XX'), qu'un conducteur électrique (109, 109') est électriquement connecté à la première métallisation; et **en ce que** la gaine protectrice (107) couvre ladite connexion électrique en intégralité de l'extérieur par rapport à l'axe central (XX').

7. Dispositif d'essai d'une force de contact (10) selon l'une quelconque des revendications 5 ou 6, **caractérisé en ce qu'**un côté extérieur de la plaque supérieure (105) opposé à l'axe central (XX') présente une forme convexe; ladite gaine protectrice (107) est circulairement symétrique dans la zone de contact (3); et **en ce qu'**un rayon de courbure du côté extérieur de la plaque supérieure (105) est inférieure/égale au rayon intérieur de la gaine protectrice (107).

8. Dispositif d'essai d'une force de contact (10) selon l'une quelconque des revendications 1 à 7, **caractérisé en ce que** dans la zone de contact (3) la gaine protectrice (107) a une épaisseur inférieure/égale à 200 µm, préférentiellement 50 µm.

9. Dispositif d'essai d'une force de contact (10) selon l'une quelconque des revendications 1 à 8, **caractérisé en ce que** la sonde de mesure (100) comporte un capuchon de protection (111) dans une zone avant; que la sonde de mesure (100) comporte un support (110) dans une zone arrière; que la gaine protectrice (107) se place plane contre le capuchon de protection (111) dans la zone avant de la sonde de mesure (100); et **en ce que** la gaine protectrice (107) est reliée au support (110) par liaison de matière dans la zone arrière de la sonde de mesure (100).

10. Dispositif d'essai d'une force de contact (10) selon l'une quelconque des revendications 1 à 9, **caractérisé en ce que** par son expansion mécanique la gaine protectrice (107) empêche la pénétration des impuretés dans la sonde de mesure (100) .

11. Dispositif d'essai d'une force de contact (10) selon l'une quelconque des revendications 1 à 10, **caractérisé en ce que** par son expansion mécanique la gaine protectrice (107) forme un blindage électrique de la sonde de mesure (100).

12. Dispositif d'essai d'une force de contact (10) selon l'une quelconque des revendications 1 à 11, **caractérisé en ce que** lors d'un contact de la sonde de mesure (100) avec l'élément de contact (1, 2) électrique la gaine protectrice (107) se pose directement à l'élément de contact (1, 2) électrique.

13. Utilisation d'un dispositif d'essai d'une force de contact (10) selon l'une quelconque des revendications 1 à 12, **caractérisé en ce que** la force de contact (F) d'un élément de contact (2) électrique contacté par le dispositif d'essai d'une force de contact (10) au niveau de la zone de contact (3) agisse obliquement à une extension longitudinale de la sonde de mesure (100); ledit élément de contact (2) électrique étant une douille de contact comportant des lamelles de la douille de contact (21, 21'); et **en ce que** les capteurs piézoélectriques (11, 11') sont agencés en dessous desdites lamelles de la douille de contact (21, 21') par rapport à l'axe centrale (XX').

14. Utilisation d'un dispositif d'essai d'une force de contact (10) selon la revendication 13, **caractérisé en ce que** précisément un capteur piézoélectrique (11, 11') de la sonde de mesure (100) est agencé en dessous de précisément une lamelle de la douille de contact (21, 21') et **en ce que** chaque capteur piézoélectrique (11, 11') mesure la force de contact (F) d'une lamelle de la douille de contact (21, 21').

15. Utilisation d'un dispositif d'essai d'une force de contact (10) selon la revendication 13, **caractérisé en ce que** tous les capteurs piézoélectriques (11, 11') mesurent la force de contact (F) de toutes les lamelles de la douille de contact (21, 21').

16. Utilisation d'un dispositif d'essai d'une force de contact (10) selon l'une quelconque des revendications 1 à 15, **caractérisé en ce que** les capteurs piézoélectriques (11, 11') sont mécaniquement connectés à une plaque de base (101) de la sonde de mesure (100); et **en ce que** dans la direction de l'extension longitudinale de la sonde de mesure (100) la gaine protectrice (107) est placée sur lesdits capteurs piézoélectriques (11, 11') qui sont mécaniquement connectés à une plaque de base (101).
